(19) Europäisches Patentamt
European Patent Office
Office européen des brevets

(11) **EP 4 717 508 A1**

(12) **EUROPEAN PATENT APPLICATION**
published in accordance with Art. 153(4) EPC

(43) Date of publication:
**01.04.2026 Bulletin 2026/14**

(21) Application number: **24810724.5**

(22) Date of filing: **02.04.2024**

(51) International Patent Classification (IPC):
**B60L 15/20** (2006.01)   **B60W 40/06** (2012.01)

(52) Cooperative Patent Classification (CPC):
**B60L 15/20; B60W 40/06;** Y02T 10/72

(86) International application number:
**PCT/JP2024/013647**

(87) International publication number:
**WO 2024/241716 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 JP 2023084889**

(71) Applicant: **DENSO CORPORATION
Kariya-city, Aichi 448-8661 (JP)**

(72) Inventors:
• **LIU, Haibo
  Kariya- city, Aichi 4488661 (JP)**
• **KAMIO, Shigeru
  Kariya- city, Aichi 4488661 (JP)**
• **KUBOTA, Masaru
  Kariya- city, Aichi 4488661 (JP)**
• **KAWAI, Keisuke
  Kariya- city, Aichi 4488661 (JP)**

(74) Representative: **TBK
Bavariaring 4-6
80336 München (DE)**

(54) **TRAVEL CONTROL DEVICE AND TRAVEL CONTROL PROGRAM FOR VEHICLE**

(57) A traveling control apparatus (10) of a vehicle (100) that travels by transmitting force of a driving motor (89, 90) to tires (111, 112, 121, 122) is provided, including: a rotation speed detection unit (91, 92) that detects a motor rotation speed of the driving motor; a torque calculation unit (11) that calculates a motor torque generated at the driving motor; and a wheel speed estimation unit (20) that estimates, based on the motor rotation speed detected by the rotation speed detection unit and the motor torque calculated by the torque calculation unit, a wheel speed which is a rotation speed of the tires.

FIG.2

EP 4 717 508 A1

**Description**

[Cross-Reference of Related Applications]

The present application is based on Japanese Application No. 2023-084889 filed on May 23, 2023, and claims the benefit of priority, with the entire contents of the patent application incorporated herein by reference.

BACKGROUND

[Technical Field]

The present disclosure relates to a traveling control apparatus of a vehicle and a traveling control program thereof.

[Description of the Related Art]

According to a vehicle that travels with a motive force generated by a driving motor and transmitted to the tires, various traveling control processes are performed by detecting wheel speed as a rotational speed of the tires using a wheel speed sensor.

For example, PTL1 discloses a control apparatus of a vehicle provided with a diving motor and a rotation speed detection means, including a target rotation speed calculation means that calculates a target rotation speed of the driving wheels based on a vehicle body speed of the vehicle and a slip control means that detects a slip of the driving wheels when the wheel speed of the driving wheels exceeds a target rotation speed and controls the motor torque of the motor such that the wheel speed becomes an appropriate rotation speed when detecting the slip. The slip control means performs, when detecting the slip, a feedback control depending on a difference between the motor rotation speed and the target rotation speed of the driving wheels to control the motor torque, thereby appropriately suppressing a slip event.

[Citation List]

[Patent Literature]

[PTL 1]
JP-A-2020-127281

[Summary of the Invention]

According to the above-described conventional control method, a wheel speed sensor is required to detect the wheel speed of the driving wheels. However, in the case where the traveling speed of the vehicle is an extremely low speed such as around 1km/hour, with a pulse-generated type traveling speed sensor, a traveling speed pulse indicating a traveling speed is unlikely to be generated and the actual traveling speed is unable to be detected. Hence, a traveling control of the vehicle in accordance with the wheel speed cannot be accurately performed.

A slip rate indicating a degree of slip between the tires and the road surface is generally calculated using an equation (vehicle body speed - wheel speed) / vehicle body speed. Hence, when the vehicle body speed is substantially zero, a denominator of the equation is zero causing a so-called zero-division, and the accurate slip rate cannot be calculated.

Moreover, in the case where accurate slip rate is not calculated, a fine slip control in which a frictional coefficient factor $\mu$ between the tires and the road surface is estimated to control the torque of the motor such that no slip occurs when the vehicle starts, cannot be accurately performed.

In the case where the wheel speed is not detected accurately when the vehicle travels at extremely low speed, a control accuracy may be deteriorated for a crawl control that controls the vehicle on an offroad such as rocky road to travel at a constant speed of an extremely low speed or a reverse travel prevention control that prevents the vehicle from traveling reversely in a regenerative braking to stop the vehicle using a regenerative resistance of the motor.

An object of the present disclosure is to provide a traveling control apparatus and a traveling control program capable of estimating a wheel speed in an extremely low speed traveling at which a traveling speed pulse is not generated.

As one aspect of the present disclosure, a traveling control apparatus (10) of a vehicle (100) that travels by transmitting force of a driving motor (89, 90) to tires (111, 112, 121, 122) is provided, including:

a rotation speed detection unit (91, 92) that detects a motor rotation speed of the driving motor;

a torque calculation unit (11) that calculates a motor torque generated at the driving motor; and

a wheel speed estimation unit (20) that estimates, based on the motor rotation speed detected by the rotation speed detection unit and the motor torque calculated by the torque calculation unit, a wheel speed which is a rotation speed of the tires.

Also, as one aspect of the present disclosure, a traveling control program of a vehicle that travels by transmitting force of a driving motor to tires is provided. The traveling control program causes at least one processor to: detect a motor rotation speed of the driving motor; detect a motor torque generated at the driving motor; and estimate, based on the detected motor rotation speed and the detected motor torque, a wheel speed which is a rotation speed of the tires.

According to the present disclosure, a traveling control apparatus and a traveling control program of a vehicle can be provided, being capable of estimating a wheel speed in an extremely low speed with which a traveling speed pulse is not generated.

[Brief Description of the Drawings]

The above-described objects and other objects, features and advantages of the present disclosure will be clarified further by the following detailed description with reference to the accompanying drawings. The drawings are:

Fig.1 is a block diagram showing an overall configuration of a vehicle according to one embodiment of the present disclosure;

Fig.2 is a block diagram showing a configuration of a traveling control apparatus 10 shown in Fig.1;

Fig.3 is a block diagram showing a detailed configuration of a wheel speed estimation unit 20 shown in Fig.2;

Fig.4 is a diagram showing a calculation equation when calculating a wheel speed in the wheel speed estimation unit 20;

Fig.5 is a flowchart showing an overall operation of the wheel speed estimation unit 20;

Fig.6 is a diagram showing a calculation equation in a calculation method of a tire rotation angle correction value $\theta_{revise}$ in the tire rotation angle correction value calculation unit 22;

Fig.7 is a diagram showing a calculation equation used when the tire rotation angle correction value calculation unit 22 calculates a backlash angle $\theta_{backlash}$

Fig.8 is a diagram showing a determination equation of a backlash passing flag FBL

Fig.9 is a block diagram showing a detailed configuration of a slip rate calculation unit 30 shown in Fig.2;

Fig.10 is a diagram showing an equation for calculating a slip rate $\lambda$ and a relaxation length $\epsilon$ in the slip rate calculation unit 30;

Fig.11 is a table showing a setting example in which the relaxation length $\epsilon$ is set depending on a peak value of the estimated coefficient factor $\mu$;

Fig.12 is a block diagram showing a detailed configuration of a $\mu$-peak estimation unit 40 shown in Fig.2;

Fig.13 is a diagram showing a specific calculation method when a $\mu$-calculating unit 41 calculates a frictional coefficient factor $\mu$;

Fig.14 is a diagram showing a specific calculation method when a $\mu$-S inclination estimation unit 42 calculates an inclination $\epsilon$;

Fig.15 is a graph showing $\mu$-S curves for a dry road (asphalt), a snow-compacted road and an icy road;

Fig.16 is a table showing an example of map for estimating a $\mu$-peak value from an inclination $\xi$ by a $\mu$-peak value calculation unit 43;

Fig.17 is a block diagram showing a detailed configuration of a fine slip control unit 50 shown in Fig.2;

Fig.18 is a flowchart showing an operation of a fine slip control performed by the fine slip control unit 50;

Fig.19 is a graph showing changes in a wheel speed, a slip rate $\lambda$, a $\mu$-peak value and a MG required torque in the case where the road surface is an icy road surface;

Fig.20 is a graph showing changes in a wheel speed, a slip rate $\lambda$, a $\mu$-peak value and a MG required torque in the case where the road surface is a dry road surface;

Fig.21 is a block diagram showing a detailed configuration of a crawl control unit 60 shown in Fig.2;

Fig.22 is a flowchart showing an operation of a crawl control performed by the crawl control unit 60; and

Fig.23 is a flowchart showing an operation of a reverse travel prevention control performed by a reverse travel prevention control unit 72.

[Description of Embodiments]

With reference to the drawings, a control apparatus of a vehicle according to one embodiment of the present disclosure will be described.

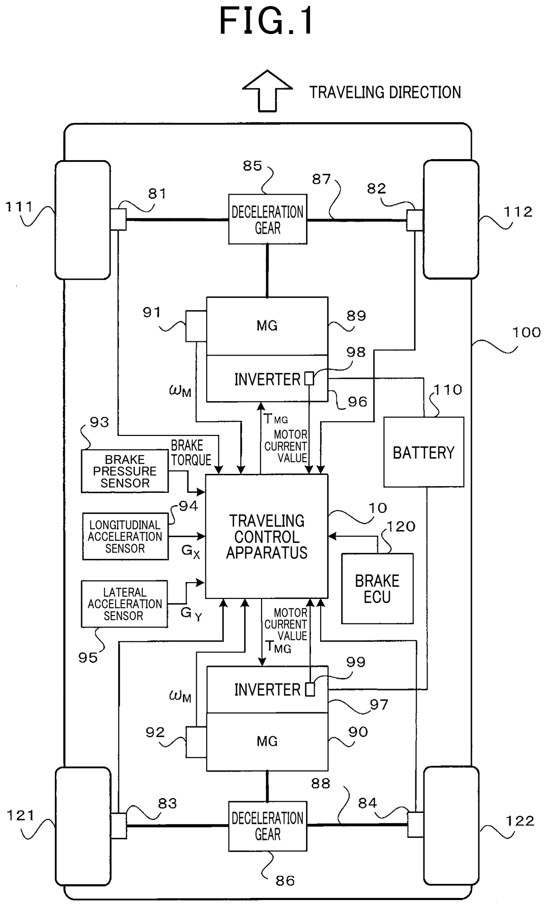

Fig.1 shows a block diagram showing an overall configuration of a vehicle 100 of one embodiment of the present disclosure. A control apparatus 10 of a vehicle of one embodiment of the present disclosure is mounted to a vehicle 100 and configured as an apparatus for controlling an operation of the vehicle 100.

The vehicle 100 is provided with a traveling control apparatus 10, 4 tires 111, 112, 121 and 122, wheel speed sensors 81, 82, 83 and 84, deceleration gears 85 and 86, drive shafts 87 and 88, motors 89 and 90 as a driving source, resolvers 91 and 92, a brake oil pressure sensor 93, a longitudinal acceleration sensor 94, a lateral acceleration sensor 95, inverters 96 and 97, current sensors 98 and 99, a battery 110 and a brake ECU 120.

The vehicle 100 is configured to transmit motive force of the driving motors 89 and 90 to the tires 111, 112, 121 and 122, thereby causing the vehicle 100 to travel.

The motors 89 and 90 produce driving forces at a rotation speed controlled by the inverters 96 and 97. Then, the driving forces produced by the motors 89 and 90 are each transmitted to the 4 tires 111, 112, 121, and 122 via the deceleration gears 85 and 86, and the drive shafts 87 and 88. Further, the motors 89 and 90 regenerate the braking energy generated when braking the vehicle 100 by the regenerative brake, converts it to be an electrical energy, thereby charging the battery 110. Thus, the motor 89 and 90 also serve as a generator.

Thus, the motor 89 and 90 are configured to serve as a motor and a generator and referred to as a motor generator (MG).

According to the present embodiment, a case will be described in which the vehicle 100 is provided with 2 motors 89 and 90, being configured as four-wheel drive vehicle that drives front tires 111 and 112 as front wheels and rear tires 121 and 122 as rear wheels. The present disclosure is not limited to such a case, but may be applied to a vehicle that drives only the tires 111 and 112 as the front wheels or a vehicle that drives only the tires 121 and 122 as front wheels.

According to the present embodiment, a case will be described in which the present disclosure is applied to an electric vehicle having the motors 89 and 90 as the driving source, but the present disclosure may be applied to a hybrid vehicle provided with a gasoline-engine and a motor.

The wheel speed sensors 81, 82, 83 and 84 each detects a wheel speed as a rotation speed of corresponding one of the tires 111, 112, 121 and 122 and outputs the detected wheel speed as a traveling speed pulse to the traveling control apparatus 10.

The brake oil pressure sensor 93 detects an oil pressure of a brake when braking the vehicle 100 and outputs the brake torque information to the traveling control apparatus 10. The brake ECU 120 performs a brake control when braking the vehicle 100.

The longitudinal acceleration sensor 94 serves as a G sensor that detects an acceleration factor Gx in the longitudinal direction of the vehicle 100 and outputs the detected acceleration factor Gx to the traveling control apparatus 10. The lateral acceleration sensor serves as a G sensor that detects an acceleration factor $G_Y$ in the lateral direction of the vehicle 100 and outputs the detected acceleration factor $G_Y$ to the traveling control apparatus 10.

The resolvers 91 and 92 are rotatably provided with the motors 89 and 90, and each functions as a rotation speed detecting unit that detects a motor rotation speed $\omega_M$ of the motors 89 and 90.

Also, the current sensors 98 and 99 are provided for the inverts 96 and 97, respectively. The current sensors 98 and 99 detect motor currents flowing through the motors 89 and 90, respectively, and output them as information of the motor current values to the traveling control apparatus 10.

The traveling control apparatus 10 performs a traveling control of the vehicle 100 in accordance with the information transmitted from the above-described various sensors and outputs information of a MG required torque $T_{MG}$ as a torque to be generated by the motors 89 and 90. The inverters 96 and 97 utilize a power supplied from the battery 110 and perform a drive control of the motors 89 and 90 in accordance with the MG required torque $T_{MG}$ transmitted from the traveling control apparatus 10.

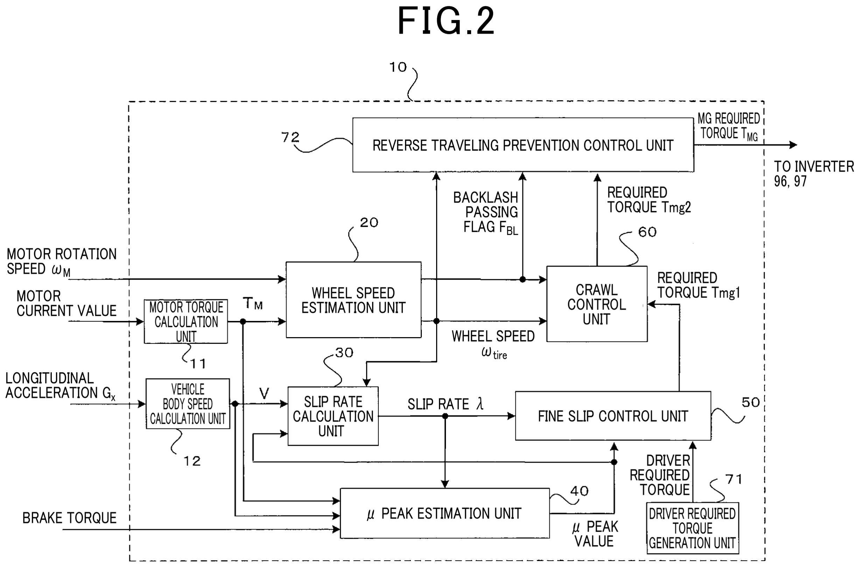

Next, with reference to a block diagram shown in Fig.2, a configuration of the traveling control apparatus 10 shown in Fig.1 will be described.

The traveling control apparatus 10 is provided with, as shown in Fig.2, a motor torque calculation unit 11, a vehicle body speed calculation unit 12, a wheel speed estimation unit 20, a slip rate calculation unit 30, a μ-peak estimation unit 40, a fine slip control unit 50, a crawl control unit 60, a driver required torque generation unit 71 and a reverse travel prevention control unit 72.

Note that the traveling control apparatus 10 includes functions other than functions shown in Fig.2, however, functions other than functions related to the present embodiment are omitted in Fig.2.

The motor torque calculation unit 11 detects a motor torque generated at the motors 89 and 90 based on the motor current value detected by the current sensors 98 and 99.

The vehicle body speed calculation unit 12 integrates a longitudinal acceleration $G_X$ as an acceleration factor in the longitudinal direction of the vehicle 100, thereby calculating the vehicle body speed of the vehicle 100.

The wheel speed estimation unit 20 estimates, based on the motor rotation speed $\omega_M$ detected by the resolvers 91 and 92 as a rotation speed detection unit and the motor torque $T_M$ calculated by the motor torque calculation unit 11, a wheel speed $\omega_{tire}$ as a rotation speed of the tires 111, 112, 121 and 122 during an extremely low speed traveling of the vehicle 100.

In more detail, the wheel speed estimation unit 20 utilizes, in addition to the motor rotation speed $\omega_M$ and the motor torque $T_M$, transfer characteristics when the driving forces of the motors 89 and 90 are transferred through a coupling part that couples between the motors 89 and 90, and the tires 111, 112, 121 and 122, thereby estimating the wheel speed $\omega_{tire}$.

Note that, the wheel speed estimation unit 20 does not actually calculate the wheel speed of each of the tires 111, 112, 121 and 122, but calculates an average wheel speed of the front wheels and an average wheel speed of the rear wheels. Specifically, the wheel speed estimation unit 20 calculates an average value of the wheel speed of the tire 111 and the wheel speed of the tire 112 to be the average wheel speed of the front wheels and an average value of the wheel speed of the tire 121 and the wheel speed of the tire 122 to be the average wheel speed of the rear wheels.

The coupling part is configured of the deceleration gears 85 and 86 that decelerate the number of rotations produced at the motors 89 and 90, and the drive shafts 87 and 88 for transmitting the rotations of the deceleration gears 85 and 86 to the tires 111, 112, 121 and 122.

The deceleration gears 85 and 86 have a function of a differential gear (differential device) that absorbs a difference in the number of rotations between the left tire and the right tire when the vehicle 100 turns on a bend in the road.

According to the traveling control apparatus 10, in the case where the vehicle 100 travels at a normal speed, each wheel speed of the tires 111, 112, 121 and 122 can be detected using the traveling speed pulses transmitted from the vehicle speed sensors 81 to 84. However, in the case where the vehicle travels at an extremely low speed such as 1km/hour, the traveling speed pulses are unlikely to be generated by the wheel sensors 81 to 84. Hence, according to the traveling control apparatus 10 of the present embodiment, in the case of an extremely low speed traveling in which the vehicle wheel sensors 81 to 84 cannot generate the traveling speed pulses, the wheel speed $\omega_{tire}$ estimated by the wheel speed estimation unit 20 is used to calculate the slip rate $\lambda$ and to perform a reverse traveling prevention control, a crawl control and the like.

The slip rate calculation unit 30 utilizes the wheel speed $\omega_{tire}$ estimated by the wheel speed estimation unit 20 to calculate a slip rate $\lambda$ indicating a degree of slip between the tires 111, 112, 121 and 122, and the road surface.

The $\mu$ (friction coefficient) peak estimating unit 40 utilizes a brake torque, a motor torque $T_M$, and a slip rate $\lambda$ calculated by the slip rate calculation unit 30, thereby estimating a $\mu$ peak value as a peak value of the friction coefficient $\mu$ between the tires 111, 112, 121 and 122, and the road surface.

The fine slip control unit 50 utilizes the slip rate $\lambda$ calculated by the slip rate calculation unit 30 and the $\mu$ peak value estimated by the $\mu$-peak estimating unit 40, thereby controlling the required torque for the motors 89 and 90 to suppress slip occurring between the tires 111, 112, 121 and 122, and the road surface. When attempting to appropriately execute a fine slip control even immediately after the vehicle starts to travel, it is required to calculate the wheel speed $\omega_{tire}$ at extremely low speed to calculate the slip rate $\lambda$.

The crawl control unit 60 controls the vehicle 100 to travel at a constant low speed. The crawl control refers to a control technique utilized in the case where the vehicle travels on an offroad such as such as a rocky road and an acceleration operation and a braking operation are difficult to be performed by the driver because the driver's body shakes due to the offroad. Once the crawl control is selected by a switch operation in the vehicle, without performing the acceleration operation or the braking operation, the vehicle is maintained to travel at an extremely low constant speed. Then, in order to perform such a crawl control, the wheel speed $\omega_{tire}$ at extremely low speed traveling is required to be estimated.

The driver required torque generation unit 71 generates a driver required torque to be outputted to the motors 89 and 90, based on an accelerator position caused by an acceleration operation of the driver, and outputs the generated driver required torque to the motors 89 and 90.

The reverse travel prevention control unit 72 performs a reverse travel prevention control to prevent the vehicle 100 from reverse-traveling immediately after the vehicle stops when a regenerative braking is performed using a regenerative resistance of the motors 89 and 90 to stop the vehicle 100.

The fine slip control unit 50 receives a driver required torque from the driver required torque generation unit 71 and outputs the received driver required torque as a required torque $T_{mg1}$ to the crawl control unit 60. Moreover, the crawl control unit 60 receives the required torque $T_{mg1}$ from the fine slip control unit 50 and outputs the received required torque as a required torque $T_{mg2}$ to the reverse travel prevention control unit 72. Then, the reverse travel prevention control unit 72 receives the required torque $T_{mg2}$ from the crawl control unit 60 and outputs the received required torque as a conclusive MT required torque $T_{MG}$ to the inverters 96 and 97.

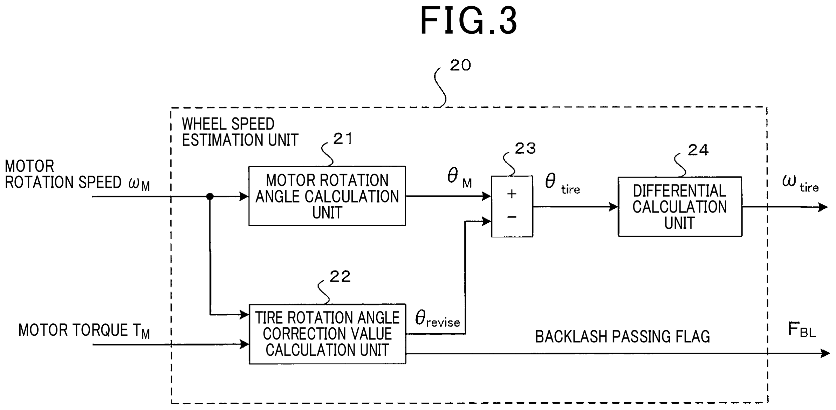

Next, with reference to a block diagram shown in Fig.3, a detailed configuration of the wheel speed estimation unit 20 shown in Fig.2 will be described.

The wheel speed estimation unit 20 utilizes a motor rotation speed $\omega_M$ detected by the resolvers 91 and 92 as a rotation speed detection unit to estimate the wheel speed $\omega_{tire}$ which is the rotation speed of the tires 111, 112, 121 and 122.

Specifically, the wheel speed estimation unit 20 subtracts a tire rotation angle correction value $\theta_{revise}$ as a total value of an angular component produced by a torsion of the drive shafts 87 and 88, an angular component produced by an inertial body of the motor and an angular component due to a backlash of the deceleration gears 85 and 86, from a motor rotation angle $\theta_M$ calculated in accordance with the motor rotation speed $\omega_M$, thereby calculating a tire rotation angle $\theta_{tire}$. Then, the calculated tire rotation angle $\theta_{tire}$ is differentiated to estimate the wheel speed $\omega_{tire}$.

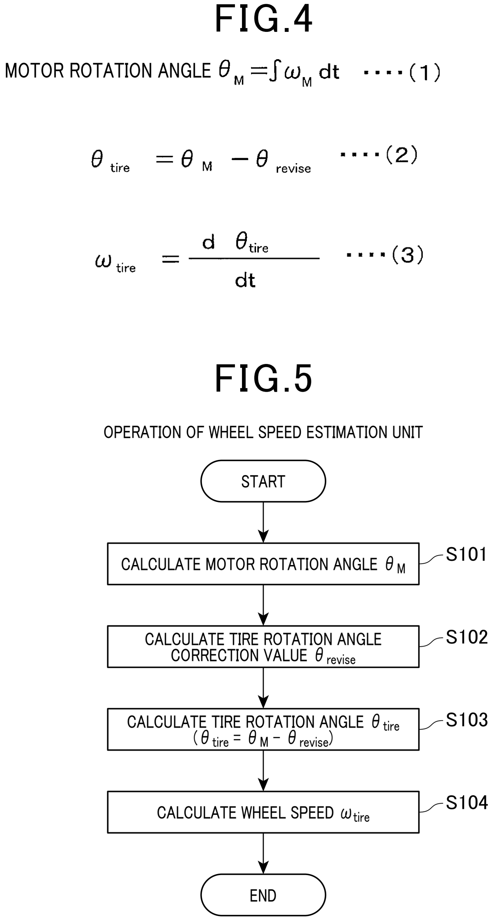

In order to perform the above-described processes, the wheel speed estimation unit 20 is configured of, as shown in Fig.3, a motor rotation angle calculation unit 21, a tire rotation angle correction value calculation unit 22, a subtractor 23 and a differential calculation unit 24. A calculation equation when calculating the wheel speed by the wheel speed estimation unit 20 will be shown in Fig.4.

As shown in Fig.1, the driving force is transmitted between the motors 89 and 90, and the tires 111, 112, 121 and 122 via the deceleration gears 85 and 86, and the drive shafts 87 and 88. Hence, in order to accurately estimate the wheel speed as a rotation speed of the tires 111, 112, 121 and 122 using the rotation speed of the motors 89 and 90, the torsion component of the drive shafts 87 and 88, the inertia component of the motor 89 and 90 and the backlash component of the deceleration gears 85 and 86 are required to be corrected.

Next, with reference to a flowchart shown in Fig.5, an overall operation of the wheel speed estimation unit 20 will be described.

Firstly, in accordance with an equation (1) shown in Fig.4, the wheel speed estimation unit 20 integrates the motor rotation speed $\omega_M$, thereby calculating the rotation angle $\theta_M$ of the motor (step S101).

Next, the tire rotation angle correction value calculation unit 22 utilizes the motor rotation speed $\omega_M$ and the motor torque $T_M$ calculated by the motor torque calculation unit 11, thereby calculating the tire rotation angle correction value $\theta_{revise}$ (step S102). The detailed calculation method of the tire rotation angle correction value $\theta_{revise}$ will be described later.

Then, in accordance with an equation (2) shown in Fig.4, the subtractor 23 subtracts the tire rotation angle correction value $\theta_{revise}$ calculated by the tire rotation angle correction value calculation unit 22 from the motor rotation angle $\theta_M$ calculated by the motor rotation angle calculation unit 21, thereby calculating the rotation angle $\theta_{tire}$ of the tire (step S103).

Lastly, in accordance with an equation (3) shown in Fig.4, the differential calculation unit 24 differentiates the rotation angle $\theta_{tire}$ of the tire, thereby calculating the wheel speed $\omega_{tire}$ (step S104).

Moreover, the tire rotation angle correction value calculation unit 22 outputs a backlash passing flag $F_{BL}$ indicating a period where the driving force from the motors 89 and 90 are not transmitted to the drive shafts 87 and 99 due to a backlash in the deceleration gears 85 and 86.

Here, the backlash refers to a dead zone between the positive rotation and the negative rotation due to a gap between gears or a play of the gears. Since the deceleration gears 85 and 86 are configured of a plurality of gears, backlash is present in the deceleration gears 85 and 86, and even when the polarity of the motor torque $T_M$ is inverted, the driving power are not transmitted in the opposite direction until the backlash passes.

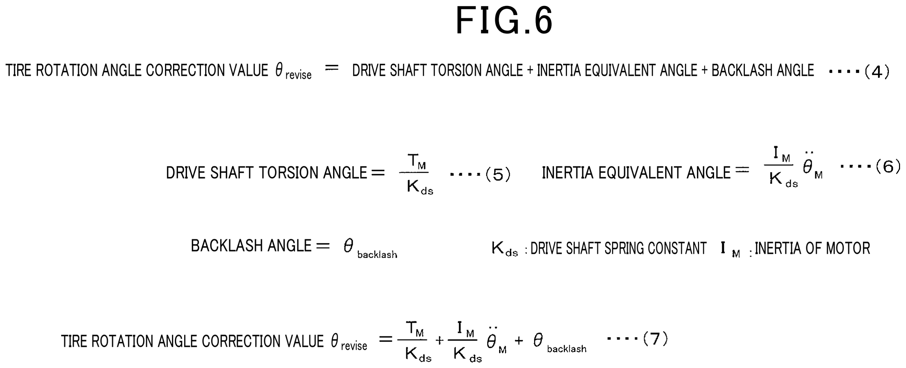

Next, with reference to equations shown in Figs.6 to 8, a detailed calculation method of the tire rotation angle correction value $\theta_{revise}$ calculated by the tire rotation angle correction value calculation unit 22 will be described.

As described above, in the tire rotation angle correction value calculation unit 22, in accordance with the equation (4) shown in Fig.6, a drive shaft torsion angle as an angular component produced by a torsion of the drive shafts 87 and 88, an inertia equivalent angle as an angular component due to an inertial body of the motor and a backlash angle as an angular component based on a backlash in the deceleration gears 85 and 86 are summed, thereby calculating the tire rotation angle correction value $\theta_{revise}$.

Here, the drive shaft torsion angle is calculated in accordance with the equation (5) shown in Fig.6 such that the motor torque $T_M$ is divided by a spring constant $K_{ds}$ indicating a rigidity of the drive shafts 87 and 88.

Also, the inertia equivalent angle is calculated in accordance with the equation (6) shown in Fig.6. Note that $I_M$ refers to an inertia of the motors 89 and 90. In other words, the inertia equivalent angle is calculated from the rotation acceleration of the motors 89 and 90.

Then, expressing the backlash angle to be $\theta_{backlash}$, the tire rotation angle correction value $\theta_{revise}$ is expressed by the equation (7) shown in Fig.6.

Then, in the wheel speed estimation unit 20, the tire rotation angle correction value calculation unit 22 utilizes a second-order transfer function that expresses a torsion resonance of the drive shafts 87 and 88 to calculate a backlash angle $\theta_{backlash}$ as an angular component due to a backlash in the deceleration gears 85 and 86.

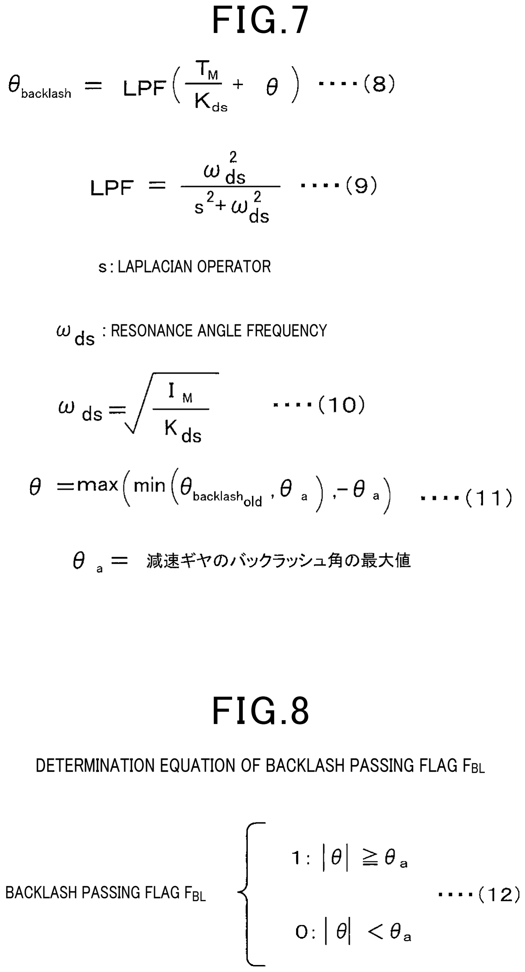

Specifically, the tire rotation angle correction value calculation unit 22 calculates the backlash angle $\theta_{backlash}$ using a formula indicated by an equation (8) shown in Fig.7.

Here, LPF is a second-order delay transfer function expressing a resonance of the drive shafts 87 and 88 and expressed by the equation (9) shown in Fig.7. In the equation, s is Laplacian operator, $\omega_{ds}$ is a resonance angle frequency of the drive shafts 87 and 88. Note that $\omega_{ds}$ is calculated from the inertia $I_M$ of the motors 89 and 90 and the spring constant $K_{ds}$ of the drive shafts 87 and 88 using a formula indicated by an equation (10) shown in Fig.7

Further, $\theta$ in the equation (8) is expressed by an equation (11) shown in Fig.7. Here, $\theta_a$ is a maximum value of the backlash angle of the deceleration gears 85 and 86, and set based on the actual measurement value or the design value. The backlash angle $\theta_{backlash(old)}$ is a previous value of the backlash angle $\theta_{backlash}$.

Further, the tire rotation angle correction value calculation unit 22 determines whether the backlash passing flag $F_{BL}$ is ON or OFF in accordance with a determination equation indicated by the equation (12) shown in Fig.8. Here, the backlash passing flag FBL being 1 (i.e. ON) indicates that it is during pass of the backlash, and the backlash passing flag FBL being 0 (i.e. OFF) indicates that it is after passing the backlash.

As described, according to the traveling control apparatus 10 of the present embodiment, since the wheel speed estimation unit 20 estimates the wheel speed in accordance with a calculation method described above, it is possible to calculate the wheel speed $\omega_{tire}$ in an extremely low speed traveling where traveling speed pulses cannot be generated by the wheel sensors 81 to 84.

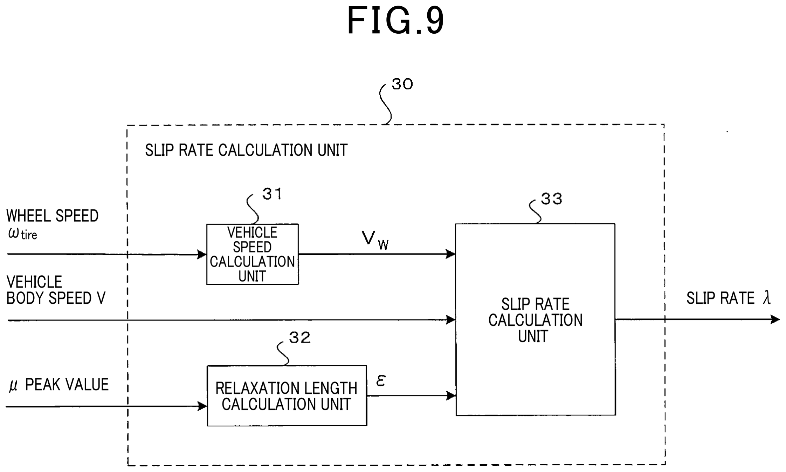

Next, with reference to a block diagram shown in Fig.9, a detailed configuration of a slip rate calculation unit 30 will be described.

The slip rate calculation unit 30 is configured of, as shown in Fig.9, a vehicle speed calculation unit 31, a relaxation length calculation unit 32 and a slip rate calculation unit 33.

The vehicle speed calculation unit 31 calculates a vehicle speed Vw as a traveling speed of the vehicle 100 using the wheel speed $\omega_{tire}$ estimated by the wheel speed estimation unit 20, and the radiuses of the tires 111, 112, 121 and 122. The vehicle speed Vw is a traveling speed of the vehicle 100 based on peripheral speeds of the tires 111, 112, 121 and 122.

The relaxation length calculation unit 32 calculates a relaxation length $\varepsilon$ of the tires 111, 112, 121 and 122 in the longitudinal direction as a moving distance required until a lateral force reaches a steady-state value when a slip angle is present in the tires 111, 112, 121 and 122.

Note that the relaxation length $\varepsilon$ is set depending on a $\mu$ peak value as a peak value of the friction coefficient between the tires 111, 112, 121 and 122, and the road surface. Hence, the relaxation length calculation unit 32 determines the relaxation length $\varepsilon$ based on the $\mu$ peak value estimated by the $\mu$-peak estimation unit 40. A detailed determination method of the relaxation length $\varepsilon$ will be described later.

The slip rate calculation unit 33 divides the deviation length of a deformation of the tires 111, 112, 121 and 122 in the longitudinal direction, by the relaxation length $\varepsilon$ calculated at the relaxation length calculation unit 32, thereby calculating the slip rate $\lambda$ indicating a degree of slip between the tires 111, 112, 121 and 122, and the road surface.

Note that the slip rate calculation unit 33 utilizes a vehicle speed Vw based on the wheel speed estimated by the wheel speed estimation unit 20 and the vehicle body speed V calculated by the vehicle body speed calculation unit 12, to calculate the deviation length of the deformation of the tires 111, 112, 121 and 122 in the longitudinal direction.

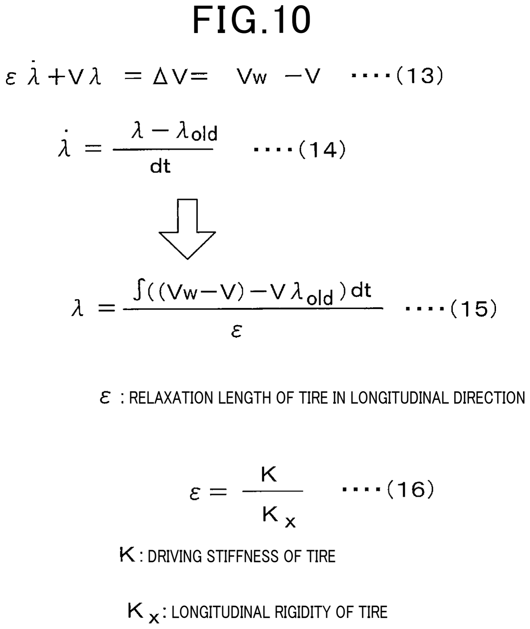

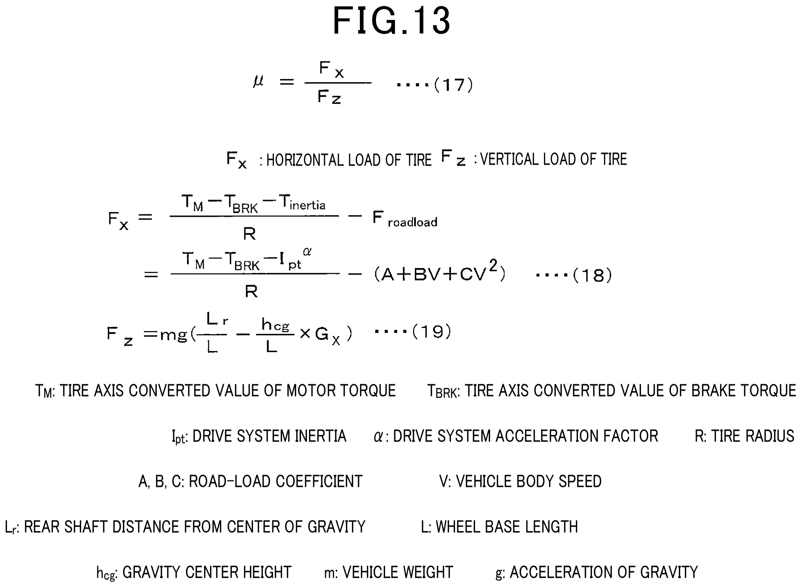

Note that a longer time is required for a propagation of a deformation in the tires 111, 112, 121 and 122 from a tip end to a terminal end thereof during traveling of the vehicle 100. Hence, a dynamic relative-equation is expressed by an equation (13) shown in Fig.13. Here, $\lambda$ refers to a slip rate of the tires 111, 112, 121 and 122, and $\lambda_{old}$ refers to previous value thereof. $\varepsilon$ is a relaxation length in the longitudinal direction of the above-described tires. Also, the differential value of the slip rate $\lambda$ is expressed by an equation (14) shown in Fig.10

Then, in accordance with the equations (13) and (14), the slip rate $\lambda$ is expressed by an equation (15) shown in Fig.10.

Further, the relaxation length $\varepsilon$ is expressed by an equation (16) shown in Fig.10. Here, K refers to a driving stiffness of the tire, and $K_X$ refers to a longitudinal rigidity of the tire.

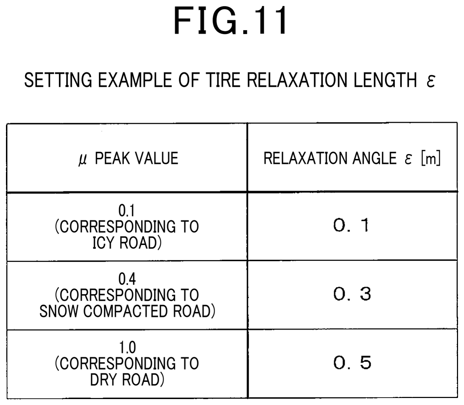

Here, since the driving stiffness of the tire K varies depending on the $\mu$ peak value between the tires and the road surface, the relaxation length $\varepsilon$ is set in accordance with the estimated $\mu$ peak value. The relaxation length $\varepsilon$ thus set depending on the $\mu$ peak value is exemplified will be shown in Fig.11.

In Fig.11, it is shown that the relaxation length $\varepsilon$ is 0.1 [m] when the $\mu$ peak value is 0.1 (corresponding to icy road), the relaxation length $\varepsilon$ is 0.3 [m] when the $\mu$ peak value is 0.4 (corresponding to snow-compacted road) and the relaxation length $\varepsilon$ is 0.5 [m] when the $\mu$ peak value is 1.0 (corresponding to dry road).

With the above-described method, the slip rate $\lambda$ in an extremely low speed traveling is calculated, whereby effects and advantages can be obtained in which an estimation accuracy of the slip rate $\lambda$ is improved in an initial period of starting the vehicle 100 on the dry road surface. Also, in the case where the vehicle is on a low $\mu$ road surface (road surface having low friction coefficient) such as an icy road or a snow-compacted road, an effect and advantages can be obtained in which a state of slip between the tires and the road surface can be appropriately determined easily.

Note that the $\mu$ peak value between the tires and the road surface can be estimated by the $\mu$-peak estimation unit 40.

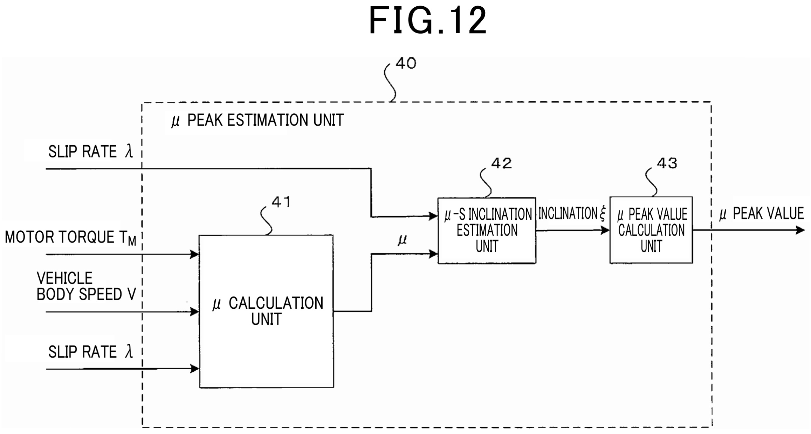

Next, with reference to a block diagram shown n Fig.12, a detailed configuration of the $\mu$-peak estimation unit 40 shown in Fig.2 will be described.

The $\mu$-peak estimation unit 40 is configured of, as shown in Fig.12, a $\mu$ (friction coefficient) calculation unit 41, a $\mu$-S inclination estimation unit 42 and a $\mu$ (friction coefficient) peak value calculation unit 43.

The $\mu$ calculation unit 41 calculates a friction coefficient $\mu$ between the tires 111, 112, 121, and 122 and the road surface, using the motor torque $T_M$ calculated by the motor torque calculation unit 11, a brake torque when braking the vehicle 100 and the vehicle body speed V calculated by the vehicle body speed calculation unit 12.

The $\mu$-S inclination estimation unit 42 estimates an inclination $\xi$ in a case where a relationship between a slip rate

$\lambda$ calculated by the slip rate calculation unit 30 and the friction coefficient $\mu$ calculated by the $\mu$ calculation unit 41 is expressed by a linear function.

The $\mu$ peak value calculation unit 43 calculates a $\mu$ peak value as a peak value of the friction coefficient $\mu$ between the tires 111, 112, 121 and 122, and the road surface from the inclination $\xi$ estimated by the $\mu$-S inclination estimation unit 42.

Here, with reference to Fig.13, a specific method for calculating the friction coefficient $\mu$ in the $\mu$ calculation unit 41 will be described.

As indicated by an equation (17) shown in Fig.13, a horizontal load $F_X$ of the tires is divided by a vertical load $F_Z$ of the tires, thereby calculating the friction coefficient $\mu$. The horizontal load $F_X$ is expressed by an equation (18) shown in Fig.13. Here, $T_M$ is a tire axis converted value of the motor torque, $T_{BRK}$ is a tire axis converted value of the brake torque, R is a tire radius, $I_{PT}$ is an inertia of the drive system, and $\alpha$ is an acceleration factor of the drive system. Moreover, A, B, C refer to a road-load coefficient for calculating a travel resistance ($F_{roadload}$) when the vehicle travels on the horizontal pavement road at a constant speed. Note that V refers to a vehicle body speed calculated by the vehicle body speed calculation unit 12.

Further, the vertical load $F_Z$ is expressed by an equation (19) shown in Fig.13. Here, m is a vehicle weight and g is an acceleration of gravity. $L_r$ is a rear shaft distance from the center of gravity, L is a length of the wheelbase, and $h_{cg}$ is gravity center height. Also, $G_x$ is an acceleration of the vehicle 100 in the longitudinal direction thereof.

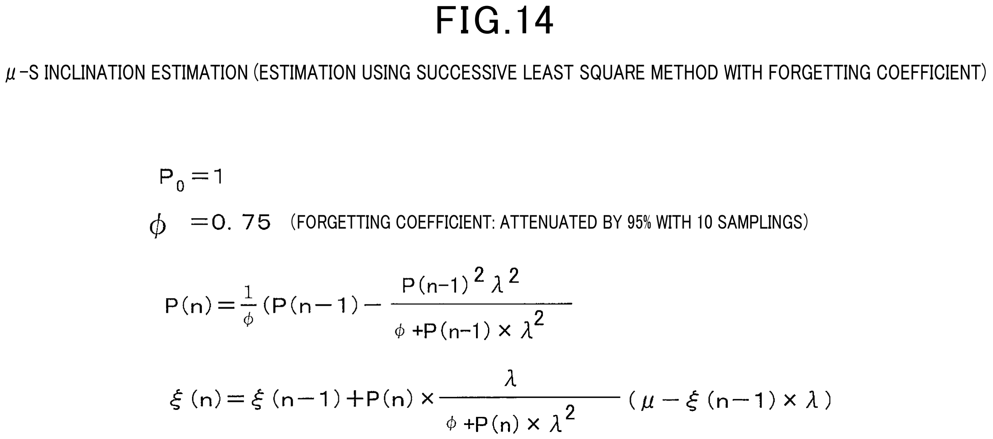

Next, with reference to Fig.14, a specific method for calculating an inclination $\xi$ using the $\mu$-S inclination estimation unit 42 will be described.

The $\mu$-S inclination estimation unit 42 utilizes a successive least square method with a forgetting coefficient to estimate an inclination $\xi$ of $\mu$-S curve. Specifically, the $\mu$-S inclination estimation unit 42 utilizes an equation shown in Fig.14 to estimate the inclination $\xi$. Here, $\varphi$ is a forgetting coefficient and its value is 0.75 in Fig.14. Moreover, $\lambda$ is a slip rate calculated by the slip rate calculation unit 30 and $\mu$ is a friction coefficient calculated by the $\mu$ calculation unit 41.

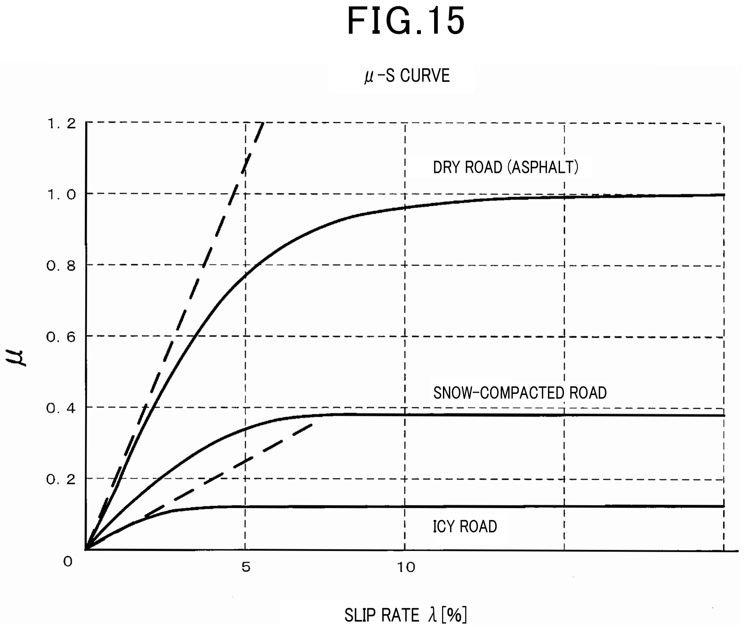

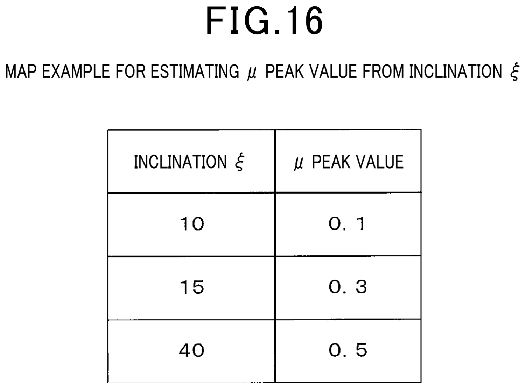

Next, with reference to Figs.15 and 16, a specific method of estimating $\mu$ value based on the estimated inclination $\xi$ by the $\mu$ peak value calculation unit 43 will be described.

Fig.15 shows $\mu$-S curves for a dry road (asphalt), a snow-compacted road and an icy road. The $\mu$ peak value calculation unit 43 estimates $\mu$ peak value based on the inclination in the vicinity of zero point of the $\mu$-S curve. Note that the $\mu$ peak value calculation unit 43 utilizes a map estimated in accordance with the inclination $\xi$ shown in Fig.16, thereby estimating the $\mu$ peak value.

In other words, the $\mu$ peak value calculation unit 43 estimates, based on the map shown in Fig.16, the $\mu$ peak value to be 0.1 in the case where the inclination $\xi$ estimated by the $\mu$-S inclination estimation unit 42 is 10, and the $\mu$ peak value to be 0.3 in the case where the inclination $\xi$ estimated by the $\mu$-S inclination estimation unit 42 is 15.

Next, with reference to a block diagram shown in Fig.7, a detailed configuration of a fine slip control unit 50 shown in Fig.2 will be described.

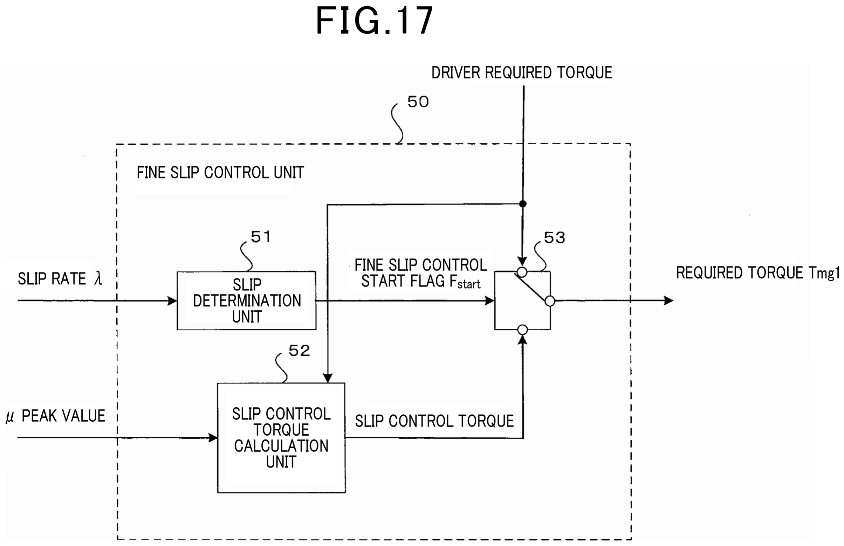

The fine slip control unit 50 is configured of, as shown in Fig.17, a slip determination unit 51, a slip control torque calculation unit 52 and a changing unit 53.

The slip determination unit 51 determines whether a slip has occurred at the tires 111, 112, 121 and 122, based on the slip rate $\lambda$ calculated by the slip rate calculation unit 30, and determines an activation timing of the fine slip control. Specifically, the slip rate determination unit 51 determines that a slip has occurred when the slip rate $\lambda$ calculated by the slip rate calculation unit 30 exceeds a predetermined threshold, for example, 3% and sets the fine slip control activation flag $F_{start}$ to be ON.

The slip control torque calculation unit 52 calculates the slip control torque in which the driver required torque is restricted depending on the $\mu$ peak value estimated by the $\mu$-peak value estimation unit 40. Specifically, the slip control torque calculation unit 52 calculates the slip control torque in which the driver required torque is restricted depending on the $\mu$ peak value when the $\mu$ peak value is less than or equal to 0.5.

The changing unit 53 outputs, when the fine slip control activation flag $F_{start}$ is OFF, the driver required torque transmitted from the driver required torque generation unit 71 as the required torque $T_{mg1}$ without any change. Moreover, the changing unit 53 outputs, when the fine slip control activation flag $F_{start}$ is ON, a torque having smaller value between the slip control torque calculated by the slip control torque calculation unit 52 and the driver required torque, as the required torque $T_{mg1}$.

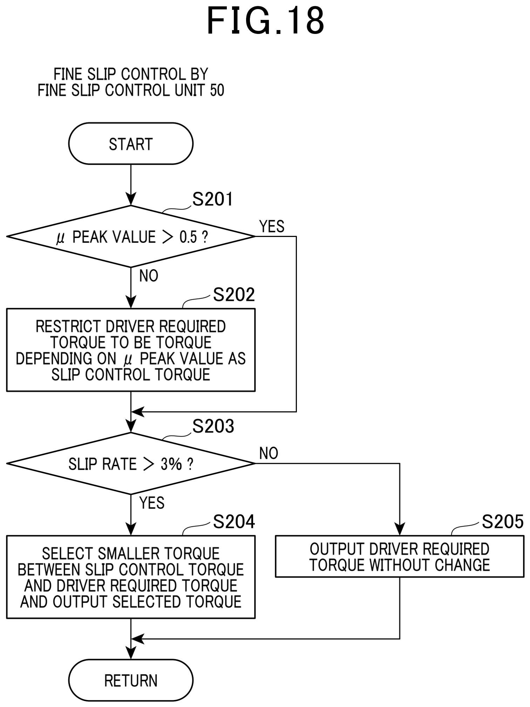

Next, with reference to a flowchart shown in Fig.18, an operation of the fine slip control unit 50 described above will be described.

Firstly, in the fine slip control unit 50, the slip control calculation unit 52 determines whether the $\mu$ peak value estimated by the $\mu$-peak value calculation unit 40 exceeds 0.5 (step S201).

Then, the slip control torque calculation unit 52 restricts, when the $\mu$ peak value is less than or equal to 0.5, the driver required torque to be a torque depending on $\mu$ peak value as a slip control torque (step S202).

Next, the slip determination unit 51 determines whether the slip rate $\lambda$ calculated by the slip rate calculation unit 30 exceeds the threshold 3% (step S203).

In the case where the slip rate $\lambda$ exceeds the threshold 3%, the slip rate determination unit 51 changes the fine slip control activation flag $F_{start}$ to be ON, whereby the changing unit 53 outputs a torque having smaller value between the slip control torque and the driver required torque, as a required torque $T_{mg1}$ (step S204).

Further, in the case where the slip rate $\lambda$ is less than or equal to the threshold 3%, the slip determination unit 51 changes the fine slip activation flag $F_{start}$ to be OFF, the changing unit 53 outputs the driver required torque as the required torque $T_{mg1}$ without any change (S205).

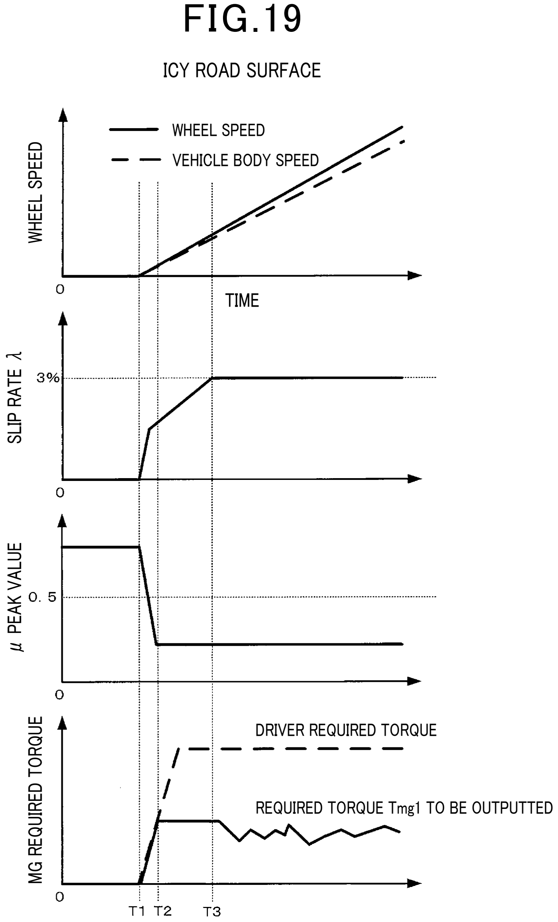

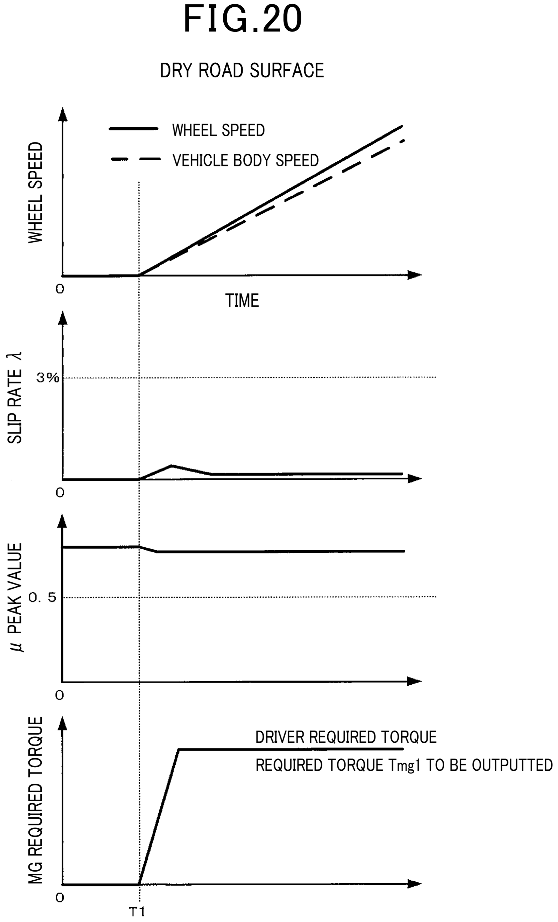

Figs.19 and 20 show a change in the MG required torque when performing the above-described fine slip control in the case where the road surface is an icy road surface and the dry road surface.

Fig.19 is a diagram showing a change in the wheel speed, the slip rate $\lambda$, the $\mu$ peak value and the MG required torque in the case where the road surface is an icy road surface.

In Fig.19, the vehicle 100 starts to travel at time T1. The $\mu$ peak value estimated at time T2 becomes a value lower than 0.5 to restrict the MG required torque in response to the change in the $\mu$ peak value. Then, when the slip rate $\lambda$ exceeds the threshold 3% at time T3, the fine slip control is started, a smaller torque is selected between the driver required torque and the slip control torque and the selected torque is outputted.

Fig.20 is a diagram showing a change in the wheel speed, the slip rate $\lambda$, the $\mu$ peak value and the MG required torque in the case where the road surface is a dry road surface.

Also, in Fig.20, the vehicle 100 starts to travel at time T1. However, since the $\mu$ peak value is not below the threshold and the slip rate $\lambda$ does not exceed the threshold, a torque is not restricted and the driver required torque is outputted as the MG required torque.

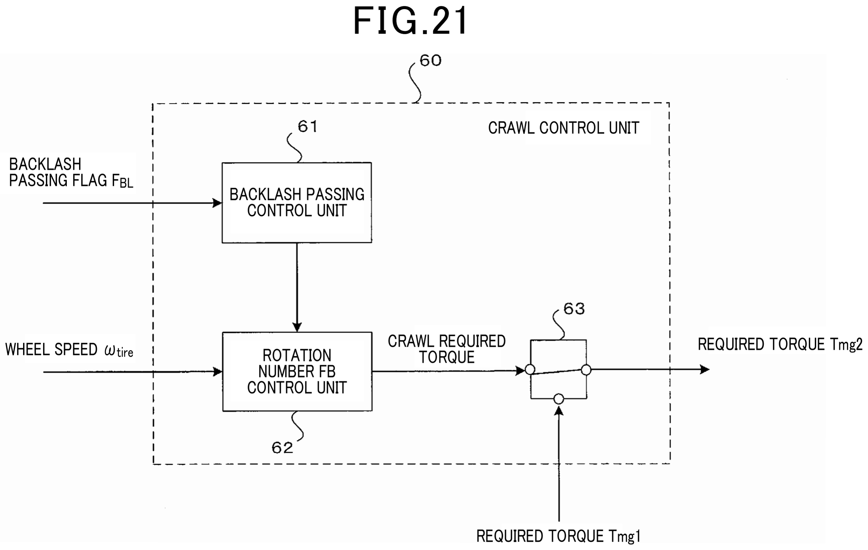

Next, with reference to a block diagram shown in Fig.21, a detailed configuration of the crawl control unit 60 shown in Fig.2 will be described.

The crawl control unit 60 performs a crawl control in the following manner. The crawl control unit 60 changes the required torque outputted to the motors 89 and 90 based on the wheel speed $\omega_{tire}$, in the case where a difference between the rotation angle of the motors 89 and 90, and the rotation angle of the tires 111, 112, 121 and 122 is less than the maximum value of the backlash angle of the deceleration gears 85 and 86 when the polarity of the motor torque $T_M$ is inverted, to decrease a feedback gain (FB gain) in a feedback control (FB control) for performing the rotation control of the motors 89 and 90, thereby performing the crawl control.

The crawl control unit 60 is configured of, as shown in Fig.21, a backlash passing processing unit 61, a rotation number FB control unit 62 and a changing unit 63.

The changing unit 63 outputs, during the normal operation in which the crawl control is not performed, outputs the required torque $T_{mg1}$ transmitted from the fine slip control unit 50 as the required torque $T_{mg2}$ without any change, to the reverse travel prevention control unit 72. Then, the changing unit 63 outputs, when the crawl control is selected by the user operation, a crawl required torque generated by the rotation number FB control unit 62 not the required torque $T_{mg1}$ transmitted from the fine slip control unit 50, as the required torque $T_{mg2}$ to the reverse travel prevention control unit 72.

The rotation number FB control unit 62 performs a feedback control based on the wheel speed $\omega_{tire}$ estimated by the wheel speed estimation unit 20, whereby the crawl required torque used for the vehicle 100 to perform the crawl control is generated and the generated crawl required torque is outputted to the changing unit 63.

The backlash passing processing unit 61 controls the FB gain (feedback gain) such as a P gain (proportional gain) and a D gain (differential gain) in the rotation number FB control unit 62 to be smaller, when the backlash passing flag $F_{BL}$ transmitted from the wheel speed estimation unit 20 is ON.

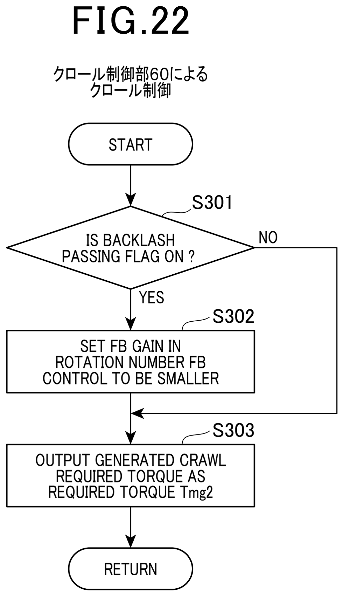

Next, with reference to Fig.22, an operation of the crawl control performed by the crawl control unit 60 will be described.

When the crawl control is performed, the backlash passing processing unit 61 determines whether the backlash passing flag $F_{BL}$ transmitted from the wheel speed estimation unit 20 is ON (step S301).

Then, the backlash passing processing unit 61 controls, when the backlash passing flag $F_{BL}$ is ON, the FB gain of the rotation number FB control unit 62 to be smaller (step S302).

Then, the rotation number FB control unit 62 performs a feedback control based on the estimated wheel speed $\omega_{tire}$, thereby generating the crawl required torque for performing the crawl operation by the vehicle 100. The changing unit 63 outputs the generated crawl required torque as the required torque $T_{mg2}$ to the reverse travel prevention control unit 72 (step S303).

The above-described control processes are executed, whereby a hunting as a phenomenon in which a drive system vibrates due to a lowered FB gain during backlash passing is prevented from occurring, even when the polarity of the motor torque $T_M$ is inverted in the crawl control.

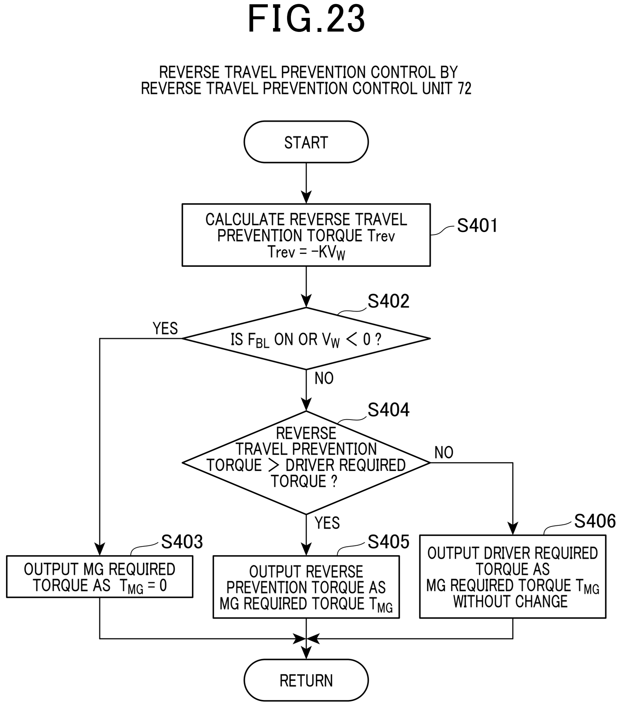

Next, with reference to a flowchart of Fig.23, an operation of a reverse travel prevention control executed by the reverse travel prevention control unit 72 will be described.

The reverse travel prevention control unit 72 changes the MG required torque $T_{MG}$ outputted to the motors 89 and 90 to be 0 in the case where the wheel speed $\omega_{tire}$ estimated by the wheel speed estimation unit 20 during forward traveling or reverse traveling of the vehicle 100 is below 0, whereby a reverse traveling of the vehicle 100 is prevented from occurring.

Further, the reverse travel prevention control unit 72 is configured to change, when the polarity of the motor torque $T_M$ is inverted, the MG required torque outputted to the motors 89 and 90 to be 0 in the case where a difference between the rotation angle of the motors 89 and 90, and the rotation angle of the tires 111, 112, 121 and 122 is less than the maximum value of the backlash angle of the deceleration gears 85 and 86, thereby preventing the vehicle 10 from reversely traveling.

Next, with reference to a flowchart of Fig.23, an operation of a reverse travel prevention control executed by the reverse travel prevention control unit 72 will be described.

Firstly, the reverse travel prevention control unit 72 calculates a reverse travel prevention torque $T_{rev}$ in accordance with the following equation (20) using the wheel speed $\omega_{tire}$ estimated by the wheel speed estimation unit 20 (step S401).

$$\text{Reverse travel prevention torque } T_{re} = -KV_W \ldots (20)$$

Here, the vehicle speed $V_W$ refers to a traveling speed of the vehicle 100 calculated from the wheel speed $\omega_{tire}$ estimated by the wheel speed estimation unit 20 and the radius of of the tires 111, 112, 121 and 122. K refers to a coefficient determined by a backlash impact of the drive system.

Next, the reverse travel prevention control unit 72 determines whether the backlash passing flag $F_{BL}$ is ON or whether the vehicle speed Vw is negative (step S402).

Then, when the backlash flag $F_{BL}$ is ON or the vehicle speed $V_W$ is negative, the reverse travel prevention control unit 72 outputs the MG required torque $T_{MG}$ which is 0 to the inverters 96 and 97 (step S403).

In the case where the backlash flag $F_{BL}$ is not ON and the vehicle speed Vw is higher than or equal to 0, the reverse travel prevention control unit 72 determines whether the reverse travel prevention torque $T_{rev}$ exceeds the driver required torque, that is, the required torque $T_{mg2}$ (step S404).

Then, in the case where the reverse travel prevention torque $T_{rev}$ exceeds the driver required torque, the reverse travel prevention control unit 72 outputs the reverse travel prevention torque $T_{rev}$ as the MG required torque $T_{MG}$ to the inverters 96 and 97 (step S405).

Further, in the case where the reverse travel prevention torque $T_{rev}$ is less than or equal to the driver required torque (required torque $T_{mg2}$), the reverse travel prevention control unit 72 outputs the driver required torque as the MG required torque to the inverters 96 and 97 (step S406).

The above-described reverse travel prevention control is performed, thereby suppressing occurrence of phenomenon in which a regenerative torque is continuously outputted regardless of negative traveling speed of the vehicle 100 even when the vehicle 100 is caused to be stopped due to a regenerative braking, causing a swing back after the vehicle stop.

The control unit and method thereof disclosed in the present disclosure may be accomplished by a dedicated computer constituting a processor programmed to execute one or more functions embodied by computer programs. Alternatively, the apparatus and method thereof disclosed in the present disclosure may be accomplished by a dedicated computer having a processor configured of dedicated hardware logic circuits. Further, the apparatus and method thereof disclosed in the present disclosure may be accomplished by one or more dedicated computer configured of combination of a processor that executes a computer program and one or more hardware logic circuits. Furthermore, the computer programs may be stored, as instruction codes executed by the computer, into a computer readable non-transitory tangible recording media.

The present disclosure has been described in accordance with the embodiments. However, the present disclosure is not limited to the embodiments and structure thereof. The present disclosure includes various modification examples and modifications within the equivalent configurations. Further, various combinations and modes and other combinations and modes including one element or more or less elements of those various combinations are within the range and technical scope of the present disclosure.

**Claims**

1. A traveling control apparatus (10) of a vehicle (100) that travels by transmitting force of a driving motor (89, 90) to tires (111, 112, 121, 122), comprising:

   a rotation speed detection unit (91, 92) that detects a motor rotation speed of the driving motor;
   a torque calculation unit (11) that calculates a motor torque generated at the driving motor; and
   a wheel speed estimation unit (20) that estimates, based on the motor rotation speed detected by the rotation speed detection unit and the motor torque calculated by the torque calculation unit, a wheel speed which is a rotation speed of the tires.

2. The traveling control apparatus according to claim 1, wherein
the wheel speed estimation unit is configured to utilize transfer characteristics when a driving force of the driving motor is transferred through a coupling part that couples between the driving motor and the tires, thereby estimating the wheel speed.

3. The traveling control apparatus according to claim 2, wherein
the coupling part is configured of a deceleration gear (85, 86) that decelerates a rotation number produced at the driving motor and a drive shaft (87, 88) for transmitting rotation of the deceleration gear to the tires.

4. The traveling control apparatus according to claim 3, wherein
the wheel speed estimation unit is configured to subtract, from a rotation angle of the driving motor calculated based on the motor rotation speed, an angular component produced by a torsion of the drive shaft, an angular component produced by an inertial body of the driving motor and an angular component due to a backlash of the deceleration gear as a correction value, to calculate a rotation angle of the tire, and differentiate the calculated rotation angle of the tires, thereby estimating the wheel speed.

5. The traveling control apparatus according to claim 4, wherein
the wheel speed estimation unit is configured to utilize a second-order transfer function that expresses a torsion resonance of the drive shaft to calculate an angular component due to a backlash in the deceleration gears.

6. The traveling control apparatus according to claim 3 further comprising a crawl control unit (60) that controls a vehicle to travel at a constant low speed, wherein
the crawl control unit is configured to change a required torque outputted to the driving motor based on wheel speed, in the case where a difference between a rotation angle of the driving motor and a rotation angle of the tires is less than a maximum value of a backlash angle of the deceleration gear when a polarity of the motor torque is inverted, whereby a feedback gain is caused to be lowered in a feedback control that performs a rotation control of the driving motor to perform a crawl control.

7. The traveling control apparatus according to claim 3 further comprising a reverse travel prevention control unit (72) that performs a reverse prevention control to prevent the vehicle from traveling reversely in a regenerative braking to stop the vehicle using a regenerative resistance of the driving motor, wherein
the reverse travel prevention control unit is configured to set a required torque outputted to the driving motor to be 0 in the case where the wheel speed estimated by the wheel speed estimation unit during forward traveling or reverse traveling of the vehicle is below 0, thereby preventing the vehicle from traveling reversely.

8. The traveling control apparatus according to claim 7, wherein
the reverse travel prevention control unit is configured to set the required torque outputted to the driving motor to be 0 in the case where a difference between a rotation angle of the driving motor and a rotation angle of the tires is less than a maximum value of a backlash angle of the deceleration gear when a polarity of the motor torque is inverted, thereby preventing the vehicle from traveling reversely.

9. The traveling control apparatus according to any one of claims 1 to 8 further comprising:

    a slip rate calculation unit (30) configured to calculate a slip rate indicating a degree of slip between the tires and a road surface using a wheel speed estimated by the wheel speed estimation unit;
    a friction coefficient peak estimating unit (40) configured to utilize the slip rate calculated by the slip rate calculation unit, thereby estimating a peak value of a friction coefficient between the tires and the road surface; and
    a fine slip control unit (50) configured to utilize the slip rate calculated by the slip rate calculation unit and the peak value of the friction coefficient estimated by the friction coefficient peak estimating unit, thereby controlling a required torque for the driving motor to suppress an occurrence of slip between the tires and the road surface.

10. A traveling control program of a vehicle that travels by transmitting force of a driving motor to tires,
the traveling control program causes at least one processor to:

    detect a motor rotation speed of the driving motor;
    detect a motor torque generated at the driving motor; and

estimate, based on the detected motor rotation speed and the detected motor torque, a wheel speed which is a rotation speed of the tires.

11. The traveling control program according to claim 10, wherein
the at least one processor utilizes transfer characteristics when a driving force of the driving motor is transferred through a coupling part that couples between the driving motor and the tires, thereby estimating the wheel speed.

# FIG.1

TRAVELING DIRECTION

# FIG.2

# FIG.3

WHEEL SPEED
ESTIMATION UNIT

MOTOR
ROTATION SPEED $\omega_M$

MOTOR TORQUE $T_M$

21 — MOTOR ROTATION ANGLE CALCULATION UNIT → $\theta_M$

23 — + / −

$\theta_{tire}$

24 — DIFFERENTIAL CALCULATION UNIT → $\omega_{tire}$

22 — TIRE ROTATION ANGLE CORRECTION VALUE CALCULATION UNIT → $\theta_{revise}$

BACKLASH PASSING FLAG → $F_{BL}$

20

EP 4 717 508 A1

# FIG.4

MOTOR ROTATION ANGLE $\theta_M = \int \omega_M \, dt \quad \cdots (1)$

$$\theta_{tire} = \theta_M - \theta_{revise} \quad \cdots (2)$$

$$\omega_{tire} = \frac{d\,\theta_{tire}}{dt} \quad \cdots (3)$$

# FIG.5

OPERATION OF WHEEL SPEED ESTIMATION UNIT

START

CALCULATE MOTOR ROTATION ANGLE $\theta_M$ — S101

CALCULATE TIRE ROTATION ANGLE CORRECTION VALUE $\theta_{revise}$ — S102

CALCULATE TIRE ROTATION ANGLE $\theta_{tire}$ ($\theta_{tire} = \theta_M - \theta_{revise}$) — S103

CALCULATE WHEEL SPEED $\omega_{tire}$ — S104

END

# FIG.6

TIRE ROTATION ANGLE CORRECTION VALUE $\theta_{revise}$ = DRIVE SHAFT TORSION ANGLE + INERTIA EQUIVALENT ANGLE + BACKLASH ANGLE $\cdots(4)$

DRIVE SHAFT TORSION ANGLE = $\dfrac{T_M}{K_{ds}}$ $\cdots(5)$   INERTIA EQUIVALENT ANGLE = $\dfrac{I_M}{K_{ds}}\ddot{\theta}_M$ $\cdots(6)$

BACKLASH ANGLE = $\theta_{backlash}$       $K_{ds}$ : DRIVE SHAFT SPRING CONSTANT   $I_M$ : INERTIA OF MOTOR

TIRE ROTATION ANGLE CORRECTION VALUE $\theta_{revise}$ = $\dfrac{T_M}{K_{ds}} + \dfrac{I_M}{K_{ds}}\ddot{\theta}_M + \theta_{backlash}$ $\cdots(7)$

EP 4 717 508 A1

# FIG.7

$$\theta_{backlash} = LPF\left(\frac{T_M}{K_{ds}} + \theta\right) \cdots (8)$$

$$LPF = \frac{\omega_{ds}^2}{s^2 + \omega_{ds}^2} \cdots (9)$$

s : LAPLACIAN OPERATOR

$\omega_{ds}$ : RESONANCE ANGLE FREQUENCY

$$\omega_{ds} = \sqrt{\frac{I_M}{K_{ds}}} \cdots (10)$$

$$\theta = \max\left(\min\left(\theta_{backlash_{old}}, \theta_a\right), -\theta_a\right) \cdots (11)$$

$\theta_a = $ 減速ギヤのバックラッシュ角の最大値

# FIG.8

DETERMINATION EQUATION OF BACKLASH PASSING FLAG $F_{BL}$

$$\text{BACKLASH PASSING FLAG } F_{BL} \begin{cases} 1 : \left|\theta\right| \geqq \theta_a \\ \\ 0 : \left|\theta\right| < \theta_a \end{cases} \cdots (12)$$

# FIG.9

EP 4 717 508 A1

30

SLIP RATE CALCULATION UNIT

WHEEL SPEED
$\omega_{tire}$

31
VEHICLE
SPEED
CALCULATION
UNIT

$V_W$

VEHICLE
BODY SPEED V

33
SLIP RATE
CALCULATION
UNIT

SLIP RATE $\lambda$

$\mu$ PEAK VALUE

32
RELAXATION LENGTH
CALCULATION UNIT

$\varepsilon$

# FIG.10

$$\varepsilon \dot{\lambda} + V\lambda = \Delta V = Vw - V \quad \cdots (13)$$

$$\dot{\lambda} = \frac{\lambda - \lambda_{\text{old}}}{dt} \quad \cdots (14)$$

$$\Downarrow$$

$$\lambda = \frac{\int ((Vw - V) - V\lambda_{\text{old}})\,dt}{\varepsilon} \quad \cdots (15)$$

$\varepsilon$ : RELAXATION LENGTH OF TIRE IN LONGITUDINAL DIRECTION

$$\varepsilon = \frac{K}{K_x} \quad \cdots (16)$$

$K$ : DRIVING STIFFNESS OF TIRE

$K_x$ : LONGITUDINAL RIGIDITY OF TIRE

# FIG.11

## SETTING EXAMPLE OF TIRE RELAXATION LENGTH $\varepsilon$

| $\mu$ PEAK VALUE | RELAXATION ANGLE $\varepsilon$ [m] |
|---|---|
| 0.1<br>(CORRESPONDING TO<br>ICY ROAD) | 0.1 |
| 0.4<br>(CORRESPONDING TO<br>SNOW COMPACTED ROAD) | 0.3 |
| 1.0<br>(CORRESPONDING TO<br>DRY ROAD) | 0.5 |

# FIG.12

EP 4 717 508 A1

# FIG.13

$$\mu = \frac{F_x}{F_z} \quad \cdots (17)$$

$F_x$ : HORIZONTAL LOAD OF TIRE   $F_z$ : VERTICAL LOAD OF TIRE

$$F_x = \frac{T_M - T_{BRK} - T_{inertia}}{R} - F_{roadload}$$

$$= \frac{T_M - T_{BRK} - I_{pt}{}^\alpha}{R} - (A + BV + CV^2) \quad \cdots (18)$$

$$F_z = mg\left(\frac{L_r}{L} - \frac{h_{cg}}{L} \times G_X\right) \quad \cdots (19)$$

$T_M$: TIRE AXIS CONVERTED VALUE OF MOTOR TORQUE     $T_{BRK}$: TIRE AXIS CONVERTED VALUE OF BRAKE TORQUE

$I_{pt}$: DRIVE SYSTEM INERTIA     $\alpha$: DRIVE SYSTEM ACCELERATION FACTOR     R: TIRE RADIUS

A, B, C: ROAD-LOAD COEFFICIENT     V: VEHICLE BODY SPEED

$L_r$: REAR SHAFT DISTANCE FROM CENTER OF GRAVITY     L: WHEEL BASE LENGTH

$h_{cg}$: GRAVITY CENTER HEIGHT     m: VEHICLE WEIGHT     g: ACCELERATION OF GRAVITY

# FIG.14

$\mu$–S INCLINATION ESTIMATION (ESTIMATION USING SUCCESSIVE LEAST SQUARE METHOD WITH FORGETTING COEFFICIENT)

$P_0 = 1$

$\phi = 0.75$   (FORGETTING COEFFICIENT: ATTENUATED BY 95% WITH 10 SAMPLINGS)

$$P(n) = \frac{1}{\phi}\left(P(n-1) - \frac{P(n-1)^2 \lambda^2}{\phi + P(n-1) \times \lambda^2}\right)$$

$$\xi(n) = \xi(n-1) + P(n) \times \frac{\lambda}{\phi + P(n) \times \lambda^2}\,(\mu - \xi(n-1) \times \lambda)$$

# FIG.15

μ−S CURVE

EP 4 717 508 A1

# FIG.16

MAP EXAMPLE FOR ESTIMATING $\mu$ PEAK VALUE FROM INCLINATION $\xi$

| INCLINATION $\xi$ | $\mu$ PEAK VALUE |
|---|---|
| 10 | 0. 1 |
| 15 | 0. 3 |
| 40 | 0. 5 |

# FIG.17

EP 4 717 508 A1

# FIG.18

FINE SLIP CONTROL BY
FINE SLIP CONTROL UNIT 50

```
        ┌─────────────┐
        │    START    │
        └─────────────┘
               │
               ▼        S201
         ╱─────────────╲          YES
        ╱ μ PEAK VALUE  ╲──────────────┐
        ╲   > 0.5 ?     ╱              │
         ╲─────────────╱               │
               │ NO                    │
               ▼        S202           │
    ┌──────────────────────┐          │
    │ RESTRICT DRIVER       │          │
    │ REQUIRED TORQUE TO BE  │          │
    │ TORQUE DEPENDING ON μ  │          │
    │ PEAK VALUE AS SLIP     │          │
    │ CONTROL TORQUE         │          │
    └──────────────────────┘          │
               │◄───────────────────────┘
               ▼        S203
         ╱─────────────╲          NO
        ╱  SLIP RATE    ╲──────────────┐
        ╲   > 3% ?      ╱              │
         ╲─────────────╱               │
               │ YES                    │
               ▼        S204            ▼        S205
    ┌──────────────────────┐   ┌──────────────────────┐
    │ SELECT SMALLER TORQUE │   │ OUTPUT DRIVER         │
    │ BETWEEN SLIP CONTROL  │   │ REQUIRED TORQUE       │
    │ TORQUE AND DRIVER     │   │ WITHOUT CHANGE        │
    │ REQUIRED TORQUE AND   │   └──────────────────────┘
    │ OUTPUT SELECTED TORQUE│              │
    └──────────────────────┘              │
               │◄───────────────────────────┘
               ▼
        ┌─────────────┐
        │   RETURN    │
        └─────────────┘
```

# FIG.19

ICY ROAD SURFACE

# FIG.20

## DRY ROAD SURFACE

# FIG.21

# FIG.22

クロール制御部60による
クロール制御

```
          ┌─────────────┐
          │    START    │
          └──────┬──────┘
                 │
                 │          S301
                 ▼
          ╱─────────────╲           NO
         ╱  IS BACKLASH  ╲──────────────┐
         ╲ PASSING FLAG ON?╱            │
          ╲───────┬───────╱             │
                  │ YES                 │
                  │        S302         │
                  ▼                     │
          ┌─────────────────┐           │
          │  SET FB GAIN IN │           │
          │ ROTATION NUMBER FB│          │
          │ CONTROL TO BE SMALLER│       │
          └────────┬────────┘           │
                   │◄───────────────────┘
                   │         S303
                   ▼
          ┌─────────────────────┐
          │ OUTPUT GENERATED CRAWL│
          │   REQUIRED TORQUE AS │
          │ REQUIRED TORQUE Tmg2 │
          └──────────┬──────────┘
                     │
                     ▼
              ┌─────────────┐
              │   RETURN    │
              └─────────────┘
```

EP 4 717 508 A1

# FIG.23

REVERSE TRAVEL PREVENTION CONTROL BY
REVERSE TRAVEL PREVENTION CONTROL UNIT 72

START

CALCULATE REVERSE TRAVEL
PREVENTION TORQUE Trev
$T_{rev} = -KV_W$ — S401

IS $F_{BL}$ ON OR $V_W < 0$ ? — S402

YES

NO

REVERSE
TRAVEL PREVENTION
TORQUE > DRIVER REQUIRED
TORQUE ? — S404

NO

YES

OUTPUT MG REQUIRED
TORQUE AS $T_{MG} = 0$ — S403

OUTPUT REVERSE
PREVENTION TORQUE AS
MG REQUIRED TORQUE $T_{MG}$ — S405

OUTPUT DRIVER REQUIRED
TORQUE AS
MG REQUIRED TORQUE $T_{MG}$
WITHOUT CHANGE — S406

RETURN

33

## INTERNATIONAL SEARCH REPORT

| International application No. |
| --- |
| **PCT/JP2024/013647** |

**A. CLASSIFICATION OF SUBJECT MATTER**

***B60L 15/20***(2006.01)i; ***B60W 40/06***(2012.01)i
FI: B60L15/20 Y; B60L15/20 S; B60W40/06

According to International Patent Classification (IPC) or to both national classification and IPC

**B. FIELDS SEARCHED**

Minimum documentation searched (classification system followed by classification symbols)

B60L15/20; B60W40/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-39447 A (TOYOTA JIDOSHA KABUSHIKI KAISHA) 10 March 2022 (2022-03-10) paragraphs [0012], [0016], drawings | 1-11 |
| A | JP 2008-178216 A (HITACHI, LTD.) 31 July 2008 (2008-07-31) | 1-11 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/013647** |

| Patent document cited in search report | | | Publication date (day/month/year) | Patent family member(s) | | | Publication date (day/month/year) |
| --- | --- | --- | --- | --- | --- | --- | --- |
| JP | 2022-39447 | A | 10 March 2022 | (Family: none) | | | |
| JP | 2008-178216 | A | 31 July 2008 | US | 2010/0114447 | A1 | |
| | | | | WO | 2008/087925 | A1 | |
| | | | | EP | 2106955 | A1 | |

Form PCT/ISA/210 (patent family annex) (July 2022)

**EP 4 717 508 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023084889 A

- JP 2020127281 A